# EUROPEAN PATENT APPLICATION

(11) **EP 4 012 605 A1**
(43) Date of publication of application: **15.06.2022**
(21) Application number: 20306541.2
(22) Date of filing: 10.12.2020
(51) Int. Cl.: G06K 9/00, G06F 21/34

(54) **METHOD FOR ENROLLING DATA IN A PORTABLE BIOMETRIC DEVICE**

(71) Applicant: Thales DIS France SA, 92190 Meudon (FR)
(72) Inventor: MARTINEZ, Frédéric, 92190 MEUDON (FR); LELOUP, Laurent, 92190 MEUDON (FR); ANDRE, Patrick, 92190 MEUDON (FR)
(74) Representative: Grevin, Emmanuel

(57) **Abstract**

The invention is a method for enrolling a reference template (21) in a card (10) embedding a biometric sensor (40), said method consisting in an enrollment procedure including a generation phase in which the reference template is incrementally generated by using a series of captured biometric data. The reference template generated during the generation phase is marked as invalid. The enrollment procedure includes a validation phase in which the reference template is progressively checked against a series of control data captured by the biometric sensor until an acceptance criterion or a failure criterion is met. The reference template is marked as valid only if the acceptance criterion has been met. The validation phase automatically starts when the reference template reaches a quality criterion.

## Description

### (Field of the invention)

The present invention relates to methods for enrolling data in a portable biometric device. It relates particularly to self-enrollment methods which allow a portable device embedding a biometric sensor to perform enrollment of a biometric reference template in the portable device itself.

### (Background of the invention)

Smart cards are portable small devices comprising a memory, a microprocessor and an operating system for computing treatments. They may comprise service applications like payment applications. Such secure elements may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine which provides them with electric power either in contact mode or contactless mode.

A smart card may contain a biometric sensor like a fingerprint sensor which can contribute to the authentication of the user of the smartcard. A biometric smart card may store a biometric reference template corresponding to the user of the smart card. A biometric smartcard may embed a biometric algorithm designed to compare a data captured by the biometric sensor with the biometric reference template in order to authenticate the cardholder.

The biometric reference data should be previously recorded in the card during an enrollment phase. The enrollment phase allows to capture the details of the biometric credential (like a fingerprint) in order to build the reference template. It is known to consider the enrollment phase to be completed when user's biometric data has been captured a predetermined number of times. Unfortunately, the recorded reference template may have a weak quality level so that authentication of the user may fail when trying to perform an authentication through biometric sensor of the card. This may lead to a high dissatisfaction of the user especially when it occurs during a transaction like a payment with a biometric banking card.

There is need to guarantee the quality level of the biometric reference template stored in a biometric apparatus like a smart card.

### (Summary of the Invention)

The invention aims at solving the above mentioned technical problem.

An object of the present invention is a computer-implemented method for enrolling a reference template in a portable biometric device that embeds a biometric sensor. The method consists in an enrollment procedure including a generation phase in which the reference template is incrementally generated by using a series of raw biometric data captured by the biometric sensor. The reference template generated during the generation phase is marked as invalid. The enrollment procedure includes a validation phase in which the reference template is progressively checked against a series of control data captured by the biometric sensor until an acceptance criterion or a failure criterion is met, the reference template being marked as valid only if said acceptance criterion has been met. The validation phase is automatically started as soon as the reference template generated in the generation phase reaches a quality criterion.

Advantageously, when the failure criterion or the acceptance criterion has not been met, the reference template may be updated using the captured control data.

Advantageously, the quality criterion may be a preset number of captures of raw biometric data or a preset duration.

Advantageously, the failure criterion may be a predefined number of captures of control data, a predefined duration or a predefined number of unsuccessful checks of the reference template against captured control data.

Advantageously, the acceptance criterion may be a predefined number of successful checks of the reference template against the captured control data, a preset number of successful checks of the reference template against the captured control data in a row or a predefined compulsory minimum threshold of checks of which at least one final series must be passed.

Advantageously, the reference template may be generated from a fingerprint, a voice pattern, an iris image, a facial image, a palm print, a blood vessel pattern or a heartbeat pattern.

Advantageously, the portable biometric device may be associated to a user, the user may be warned by a first indicator that the enrollment procedure is ongoing and the user may be warned by a second indicator that the reference template is validated.

An object of the present invention is a portable biometric device embedding a biometric sensor and able to perform an enrollment procedure including a generation phase in which a reference template is incrementally generated by using a series of raw biometric data captured by the biometric sensor. The portable biometric device comprises at least a processing unit and instructions which cause said portable biometric device:
to mark as invalid the reference template generated during the generation phase,
and to perform a validation phase included in the enrollment procedure in which the portable biometric device progressively checks the reference template against a series of control data captured by the biometric sensor until an acceptance criterion or a failure criterion is met, and marks the reference template as valid only if the acceptance criterion has been met,
said portable biometric device being configured to automatically start the validation phase as soon as the reference template generated in the generation phase reaches a quality criterion.

Advantageously, when the failure criterion or the acceptance criterion has not been met, the portable biometric device may be configured to update the reference template using the captured control data.

Advantageously, the portable biometric device may be a smart card, a wearable device, a phone or a USB-type dongle.

Advantageously, the raw biometric data may be a fingerprint, a voice pattern, an iris image, a facial image, a palm print, a blood vessel pattern or a heartbeat pattern.

Advantageously, the portable biometric device may be configured to emit a signal reflecting that the reference template has been validated.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows a first exemplary flow diagram for enrolling a biometric reference template according to an example of the invention,
- Figure 2 shows a second exemplary flow diagram for enrolling a biometric reference template according to an example of the invention, and
- Figure 3 shows a diagram of architecture of a biometric smart card according to an example of the invention.

### (Detailed description of the preferred embodiments)

The invention may apply to any type of portable biometric device embedding a biometric sensor used to enroll a biometric reference template of a user. Form factor of the portable biometric device may vary. The portable biometric device may be a biometric smart card like a banking card, an identity document or a badge storing access rights for instance. The portable biometric device may be a wearable device (like a smart watch), a phone or a USB-type dongle.

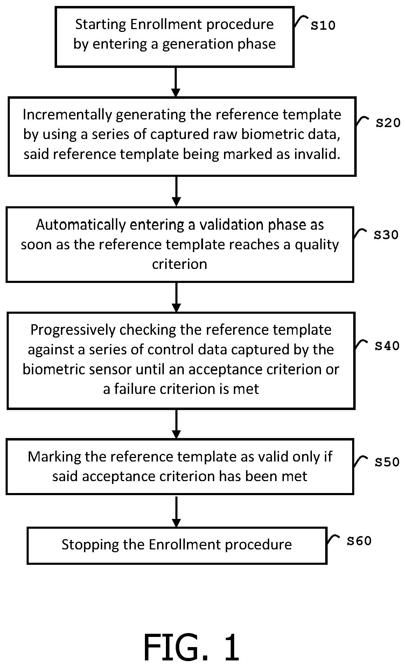

Figure 1 shows a first exemplary flow diagram for enrolling a biometric reference template according to an example of the invention.

In this example, the portable biometric device is a banking card intended to be used by its associated user (i.e. bank customer) for payment or cash withdrawal.

The bank smart card embeds a biometric sensor designed to capture fingerprint data.

At step S10, an enrollment procedure starts by entering the portable diametric device in a generation phase. Starting of the enrollment procedure may be triggered as soon as the smart card is coupled to a reader, a command received by the smart card from the card reader or a button located on the card body is activated.

The smart card may get energy from an internal battery or from a card reader that may provide power to the card in contact or wireless mode.

At step S20, the portable biometric device performs the generation phase in which it incrementally generates a reference template by using a series of raw biometric data captured by its biometric sensor until a quality criterion is met. Typically, the biometric sensor captures the user's fingerprint a predefined number of times. A first version of the reference template is created with the first captured raw biometric data then the reference template is updated with the further captured raw biometric data. The reference template generated during the generation phase is marked as "invalid". In other words, the reference template has a status which is set to invalid. This status may be stored in a flag, a field, a register or any relevant container allocated to the biometric reference template.

The quality criterion may be a preset number of captures of raw biometric data (like 5, 12 or 20 captures) or a preset duration for the generation phase (like 2 or 6 minutes).

At step S30, the portable biometric device automatically enters a validation phase which is part of the enrollment procedure. The generation phase is finished when the validation phase starts. The validation phase aims at validating the biometric reference template. In another embodiment, the validation phase is part of the generation phase.

At step S40, during the validation phase, the portable biometric device progressively checks the reference template issued by the generation phase against a series of control data captured by the biometric sensor until an acceptance criterion or a failure criterion is met. Each control data is a biometric data captured by the biometric sensor. The portable biometric device checks if the control data matches the reference template (i.e. the current version of the reference template).

At step S60, the portable biometric device stops the enrollment procedure when either the acceptance criterion or the failure criterion is met. If the acceptance criterion has been met, the portable biometric device marks the reference template as valid before stopping the enrollment procedure.

At step S50, if the failure criterion has been met (i.e. if the acceptance criterion has not been met), the reference template remains with an invalid status.

In a variant, a reference template remaining with an invalid status may be erased from the portable biometric device at the end of the enrollment procedure.

When the reference template issued by the enrollment procedure has been marked as valid, the portable biometric device may be allowed to use the reference template for authenticating the user of the portable biometric device in a further transaction. Conversely, if the reference template issued by the enrollment procedure remains marked as invalid, the portable biometric device is not allowed to use the reference template for authenticating the user of the portable biometric device.

An additional security mechanism may be required to allow the portable biometric device to use the reference template in transactions (i.e. activation of the reference template for future user authentications). For instance, a successful transaction with the cardholder's PIN code or a successful online transaction may trigger the activation of the reference template.

The failure criterion may be a predefined number of captures of control data (like 4, 8 or 10 captures), or a predefined number of unsuccessful checks of the reference template against captured control data (like 2 or 3 unsuccessful checks), or a predefined duration.

The acceptance criterion may be a predefined number of successful checks of the reference template against the captured control data. For instance, the reference template may be set to "valid" status as soon as four captured control data match the reference template. Alternatively, the acceptance criterion may be a preset number of successful checks of the reference template against the captured control data in a row. For instance, the reference template may be set to "valid" status as soon as three checks are passed in a row.

The acceptance criterion may be a predefined compulsory minimum threshold of checks (like 10, 12 or 15 checks) of which at least the last x (e.g. 3 or 4) must be passed. In other words, the acceptance criterion may be a predefined compulsory minimum threshold of checks of which at least one final series must be successful.

In a preferred embodiment, the portable biometric device may update the reference template with the control data when the acceptance criterion has not been met. Thus the reference template may be enriched during the validation phase by taking advantage of the captured biometric data of the user.

The enrollment procedure of the invention is not limited to issuance of reference template based on fingerprint. The biometric reference template may be generated from various biometric data like voice, iris, facial image, palm print, blood vessel(s) or heartbeat.

In one embodiment, the user may be warned by an indicator that the enrollment procedure is ongoing and warned by another indicator that the reference template has been validated. The portable biometric device may directly provide the indicator(s) to the user via displayed message(s), light, sounds or vibration generated by its own hardware component(s). The portable biometric device may also provide the indicator(s) to the user through another apparatus to which it is coupled. For instance, a smart card may send signals to a coupled card reader which provides the indicator(s) to the user via displayed message(s), light or sounds.

Other indicators may be used to guide the user especially for showing the current treatment carried out by the portable biometric device. For instance, the portable biometric device may emit signals reflecting the start (or end) of a new iteration in the generation phase or in the validation phase.

The portable biometric device may store a plurality of biometric template references corresponding to one or several users. For instance, it may store two fingerprint template references corresponding to two different fingers of a same user or a facial image template allocated to a user and a voice pattern (template) associated to another user.

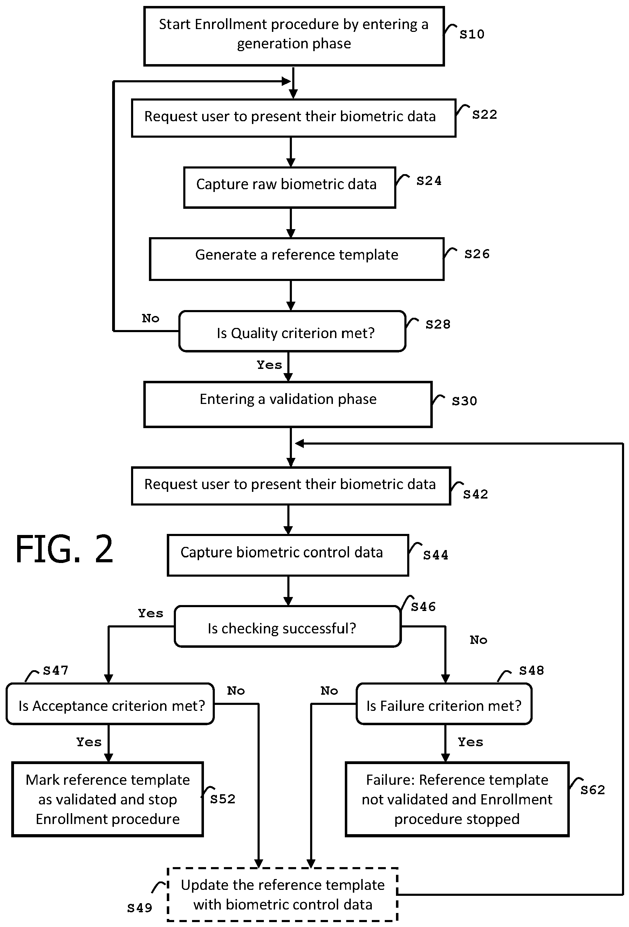

Figure 2 shows a second exemplary flow diagram for enrolling a biometric reference template according to an example of the invention.

In this example, the portable biometric device is a banking card 10 embedding a fingerprint scanner 40.

Step S10 is similar to that described at Figure 1.

By reference to Figure 1, step S20 is detailed with steps S22 to S28.

At step S22, the user is requested to present their biometric data. This may be done via an explicit indicator (like a LED which is lighted) or in implicit indicator. For instance, the user may be aware that the finger should be presented after inserting the card in the card reader.

At step S24, the biometric sensor 40 captures a raw biometric data. Optionally, a biometric treatment aiming at detecting spoofing attacks may be applied to the captured raw biometric data by the sensor 40 or by a controller of the sensor for instance.

At step S26, the card 10 generates the biometric reference template by using the captured raw biometric data. Typically, a first version of the reference template may be created during the first iteration by extracting specific reference data (like minutiae of fingerprint). During next iteration of the loop, the reference template may be updated by using the further captured raw biometric data.

At step S28, the card 10 verifies if the quality criterion is met. For example, the card 10 may consider the quality criterion to be met when the reference template has been updated a predefined number of times.

At step S30, the smart card 10 stops the generation phase and automatically enters a validation phase as soon as the quality criterion is reached.

By reference to Figure 1, step S40 is detailed with steps S42 to S48.

At step S42, the user is requested to present their biometric data, for instance a finger. The user may be warned by an explicit indicator like a sound or a light for instance. The explicit indicator may be provided through a LED which is lighted or a message displayed on a screen embedded in a terminal coupled to the smart card.

At step S44, the biometric sensor 40 captures a biometric control data. Optionally, a biometric treatment aiming at detecting spoofing attacks may be applied to the captured control data.

At step S46, the card 10 checks if the biometric control data matches the current reference template.

In case of successful checking at steps S46, the card assesses an acceptance criterion at Step S47.

If the acceptance criterion has not been met, the card restarts the processing loop by going back to step S42 (i.e. at the beginning of the validation phase).

If the acceptance criterion has been met, the smart card marks the reference template as valid and ends the enrollment procedure at Step S52.

In case of unsuccessful checking at steps S46 (i.e. if the biometric control data does not match the current reference template), the smart card assesses a failure criterion at Step S48.

If the failure criterion has not been met, the smart card restarts the processing loop by going back to step S42 (i.e. at the beginning of the validation phase).

If the failure criterion has been met, the smart card lets the status of the reference template unchanged (i.e. status set to "invalid") and ends the enrollment procedure at Step S62.

In one embodiment, the card 10 may update the current reference template with the control data when the check of the acceptance criterion failed. In such a case the reference template is updated before returning to step S42.

In one embodiment, the card 10 may update the current reference template with the control data when the check of the failure criterion failed.

The smart card 10 is configured to use the reference template for authenticating a user in a further transaction only if the status of the reference template issued by the enrollment procedure has set to the validated.

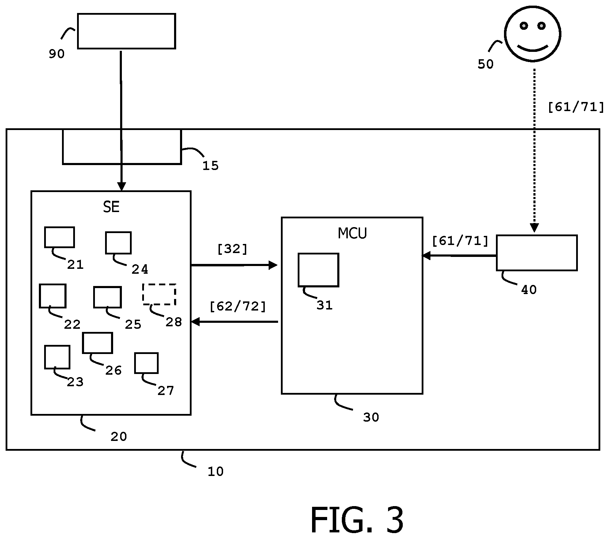

Figure 3 shows a diagram of architecture of a biometric smart card according to an example of the invention.

In this example, the biometric smart card 10 is a banking smart card.

The smart card 10 comprises a secure chip 20 (also called secure element), a biometric sensor 40 and a controller 30 of the sensor. The controller 30 may be a processing unit (also named processor unit) like a microcontroller unit (MCU). The biometric sensor may be a conventional biometric sensor like a fingerprint sensor.

The controller 30 is coupled to the biometric sensor 40 and able to perform biometric pre-computation process on raw biometric data captured by the biometric sensor. Preferably, the processing unit 30 is the only entity that can directly access the sensor. The controller 30 is configured to retrieve captured biometric data (i.e raw biometric data 61 and control data 71) from the sensor 40.

The secure element 20 and/or the controller 30 may comprise a firmware 28/31 (i.e. biometric algorithm) aiming at detecting spoofing attacks on the sensor 40.

The controller 30 may be designed to activate the capture of the sensor 40 upon receipt of a specific message 32 from the secure element 20.

Optionally, the firmware 31 may also be designed to extract remarkable items (62, 72) from the captured biometric data collected by the sensor 40.

The controller 30 comprises a processor and a non-volatile memory (not shown). The non-volatile memory stores the firmware 31 which includes software instructions that are executed by the processor to perform the features of the controller.

In the example of Figure 3, the secure element 20 is a conventional smart card chip with additional features. The secure element 20 is able to contribute to a banking transaction with an external machine. For instance, the transaction may be a payment transaction or cash withdrawal. The secure element 20 comprises the reference biometric data 21 generated during an enrollment procedure.

In one embodiment, the secure element 20 may comprise an extracting engine 22 for extracting remarkable items from the biometric data 61, 71 collected by the sensor 40.

The secure element 20 comprises a matching unit 23 configured to compare the reference biometric data 21 with remarkable items extracted from the biometric data collected by the sensor 40. The secure element 20 comprises an operating system (not shown).

The secure element 20 comprises a generator unit 24 designed to generate the reference template during a generation phase of the enrollment procedure. The generator unit 24 is configured to incrementally generate (creation then update) a reference template marked as invalid (status set to "invalid") by using a series of raw biometric data captured by the biometric sensor 40.

The secure element 20 comprises a validator unit 25 designed to perform the validation phase of the enrollment procedure. The validator unit 25 is configured to automatically start the validation phase as soon as the reference template generated in the generation phase reaches a preset quality criterion. The validator unit 25 is configured to perform a validation phase included in the enrollment procedure. The validator unit 25 is configured to progressively check the reference template (issued by the generation phase) against a series of control data captured by the biometric sensor 40 until an acceptance criterion or a failure criterion is met. The validator unit 25 is configured to mark the reference template as valid (i.e. status set to "valid" or "validated") only if the acceptance criterion has been met. The validator unit 25 may be configured to update the reference template using the captured control data when neither the failure criterion nor the acceptance criterion has not been met.

The secure element 20 comprises an authenticator unit 26 designed to authenticate a user using his/her biometric data captured by the sensor 40 and the reference template only if the status of the reference template has been set to "validated".

The secure element 20 may comprise a signaling unit 27 designed to emit signals intended to warn the user of the current treatment ongoing into the card.

The smart card 10 comprises a communication interface 15 which may be designed to exchange data with another apparatus 90 (like a card reader for example) in contact mode, in contactless mode or both modes. The communication interface 15 is linked to the secure element 20.

The secure element 20 comprises a processor and a non-volatile memory (not shown). In one embodiment, the non-volatile memory stores software instructions which are executed by the processor to perform the functions of the secure element. In one embodiment, the functions of the secure element 20 may be implemented as pure hardware solution or a combination of firmware and hardware.

The controller 30 and the secure element 20 may communicate through I2C (Inter-Integrated Circuit), through SPI (Serial Peripheral Interface), through SWP (Single Wire Protocol) or any relevant protocol.

The controller 30 and the secure element 20 may be implemented as separated hardware components or merged in a single hardware component.

The card may store a plurality of biometric template references corresponding to one or several users.

In one embodiment, the biometric smart card 10 may be configured to work at least in an enrollment mode and in a transaction mode. The smart card 10 may be configured to automatically activate the enrollment mode when the card receives a specific command or signal from a connected terminal (like a card reader) or when no valid reference template can be found into the smart card. The smart card 10 may be configured to automatically activate the transaction mode (and deactivate the enrolment mode) when a reference template having a status set to "validated" is available into the card.

Although examples of the invention has been provided in the banking domain, the invention also applies to other domains. For example, the portable biometric device may be a smartcard providing access to a physical building, room or area.

The reference template generation may correspond to a creation or an update operation.

Some embodiments of the invention may ensure a progressive improvement of the biometric reference template during a single procedure as perceived by the user.

The invention is not limited to the described embodiments or examples. In particular, the described examples and embodiments may be combined.

The invention is not limited to Banking smart cards and applies to any biometric portable device intended to store a biometric reference template of a user.

The portable biometric device may embed several biometric sensors (of same or different types) and several associated controllers. The invention may allow to enroll any number of biometric reference template.

Although examples of the invention has been provided for a fingerprint sensor, it may apply to devices embedding any biometric sensor targeting various types of data: iris, voice, face, blood or palm print for examples.

By smoothly including a validation phase in the enrollment procedure, the quality of the recorded biometric reference template can be increased while having the possibility of guiding the card user through a single enrollment process.

Thanks to some embodiments of the invention, users may self-enroll their biometric reference in a portable biometric device by following a single procedure which guides the users from the beginning to the end. An unambiguous indication of the successful enrollment of the biometric reference may be provided to the user when a biometric reference template is ready to be used for a user authentication required by a further transaction.

## Claims

1. A computer-implemented method for enrolling a reference template (21) in a portable biometric device (10) embedding a biometric sensor (40), said method consisting in an enrollment procedure including a generation phase in which the reference template is incrementally generated by using a series of raw biometric data captured by the biometric sensor,
**characterized in that** the reference template generated during the generation phase is marked as invalid,
and **in that** the enrollment procedure includes a validation phase in which the reference template is progressively checked against a series of control data captured by the biometric sensor until an acceptance criterion or a failure criterion is met, said reference template being marked as valid only if said acceptance criterion has been met,
said validation phase being automatically started as soon as the reference template generated in the generation phase reaches a quality criterion.

2. The method according to claim 1, wherein when said failure criterion or said acceptance criterion has not been met, said reference template is updated using the captured control data.

3. The method according to claim 1, wherein the quality criterion is a preset number of captures of raw biometric data or a preset duration.

4. The method according to claim 1, wherein the failure criterion is a predefined number of captures of control data, a predefined duration or a predefined number of unsuccessful checks of the reference template against captured control data.

5. The method according to claim 1, wherein the acceptance criterion is a predefined number of successful checks of the reference template against the captured control data, a preset number of successful checks of the reference template against the captured control data in a row or a predefined compulsory minimum threshold of checks of which at least one final series must be passed.

6. The method according to claim 1, wherein the reference template is generated from a fingerprint, a voice pattern, an iris image, a facial image, a palm print, a blood vessel pattern or a heartbeat pattern.

7. The method according to claim 1, wherein the portable biometric device (10) is associated to a user (50), wherein the user is warned by a first indicator that the enrollment procedure is ongoing and wherein the user is warned by a second indicator that the reference template is validated.

8. A portable biometric device (10) embedding a biometric sensor (40) and able to perform an enrollment procedure including a generation phase in which a reference template (21) is incrementally generated by using a series of raw biometric data captured by the biometric sensor,
**characterized in that** the portable biometric device comprises at least a processing unit and instructions which cause said portable biometric device:
to mark as invalid the reference template generated during the generation phase,
and to perform a validation phase included in the enrollment procedure in which the portable biometric device progressively checks the reference template against a series of control data captured by the biometric sensor until an acceptance criterion or a failure criterion is met, and marks the reference template as valid only if the acceptance criterion has been met,
said portable biometric device being configured to automatically start the validation phase as soon as the reference template generated in the generation phase reaches a quality criterion.

9. The portable biometric device according to claim 8, wherein when the failure criterion or the acceptance criterion has not been met, said portable biometric device is configured to update the reference template using the captured control data.

10. The portable biometric device according to claim 8, wherein the quality criterion is a preset number of captures of raw biometric data or a preset duration.

11. The portable biometric device according to claim 8, wherein the failure criterion is a predefined number of captures of control data, a predefined duration or a predefined number of unsuccessful checks of the reference template against captured control data.

12. The portable biometric device according to claim 8, wherein the acceptance criterion is a predefined number of successful checks of the reference template against the captured control data, a preset number of successful checks of the reference template against the captured control data in a row or a predefined compulsory minimum threshold of checks of which at least one final series must be passed.

13. The portable biometric device according to claim 8, wherein the portable biometric device is a smart card, a wearable device, a phone or a USB-type dongle.

14. The portable biometric device according to claim 8, wherein the raw biometric data is a fingerprint, a voice pattern, an iris image, a facial image, a palm print, a blood vessel pattern or a heartbeat pattern.

15. The portable biometric device according to claim 8, wherein the portable biometric device is configured to emit a signal reflecting that the reference template has been validated.
